## Europäisches Patentamt
## European Patent Office
## Office européen des brevets

(19)

(11) Veröffentlichungsnummer : **0 124 759**
**B1**

(12)

# EUROPÄISCHE PATENTSCHRIFT

(45) Veröffentlichungstag der Patentschrift :
30.12.86

(21) Anmeldenummer : 84103613.0

(22) Anmeldetag : 03.04.84

(51) Int. Cl.⁴ : **C 08 F214/06**, C 08 F210/02,
C 08 F291/00, C 09 J 3/14 //
(C08F291/00, 214:06, 210:02)

(54) Verfahren zur Herstellung von wässrigen Copolymerdispersionen und deren Verwendung.

(30) Priorität : 05.04.83 DE 3312255

(43) Veröffentlichungstag der Anmeldung :
14.11.84 Patentblatt 84/46

(45) Bekanntmachung des Hinweises auf die Patenterteilung : 30.12.86 Patentblatt 86/52

(84) Benannte Vertragsstaaten :
AT BE CH DE FR GB IT LI NL SE

(56) Entgegenhaltungen :
EP-A- 0 026 490
EP-A- 0 076 511
FR-A- 2 114 658

(73) Patentinhaber : WACKER-CHEMIE GMBH
Prinzregentenstrasse 22
D-8000 München 22 (DE)

(72) Erfinder : Ball, Peter, Dr. Dipl.-Chem.
Kettelerstrasse 11
D-8261 Emmerting (DE)
Erfinder : Marquardt, Klaus, Dr. Dipl.-Chem.
Lindacher Strasse 77
D-8263 Burghausen (DE)
Erfinder : Selig, Manfred, Dr. Dipl.-Chem.
Regerstrasse 45
D-8263 Burghausen (DE)

## Beschreibung

Wäßrige Copolymerdispersionen, insbesondere solche von Copolymeren mit einem überwiegenden Gehalt an Vinylchlorid (VC) und Ethylen (E) sind als Bindemittel für Anstrichfarben, Papierbeschichtungen oder Textilbeschichtungen sowie als Schmelzklebstoffe sehr gut geeignet. Die darin enthaltenen Copolymeren lassen sich aber auch nach Abtrennung des Wassers zu Formteilen, wie Rohrleitungen oder Isolierungen elektrischer Leiter verarbeiten.

Da VC und E als Rohstoffe aufgrund ihrer einfachen großtechnischen Herstellung bzw. Gewinnung preisgünstiger sind als andere ethylenisch ungesättigte Monomere, haben die hauptsächlich aus ihnen bestehenden Polymerisate im Zeitalter steigender Rohstoffpreise eine besondere Bedeutung.

Die Herstellung von Emulsionspolymerisaten, die zum überwiegenden Teil aus VC und E bestehen, ist jedoch sehr schwierig, da zum Einbau nennenswerter Mengen E in das Polymerisat hohe Drucke und damit sehr aufwendige Autoklavenanlagen notwendig sind.

So beschreibt beispielsweise die DE-A-15 70 9-21 (& US-A-34 03 137 ; & = zur gleichen Patentfamilie gehörend) ein Verfahren zur Herstellung von Copolymeren des Ethylens und Vinylchlorids, bei dem zur Erreichung des Gehaltes von etwa 10 Gew.% E-Einheiten im Copolymerisat bereits Drucke von über 1 000 psi (= über 69 bar) notwendig sind. Um beispielsweise 24 Gew.% Ethylen ins Polymere einzupolymerisieren, sind dort bereits über 1 000 bar notwendig (vgl. Beispiel 4). Selbst Drucke von über 3 447 bar werden in dieser Anmeldung nicht ausgeschlossen.

Spätere Veröffentlichungen derselben Anmelderin beschreiben den Einbau von wasserlöslichen Hilfsmonomeren wie Acrylamid, N-Methylolacrylamid oder Acrylsäure in das VC/E-Copolymere zur Modifizierung der Kolloid- und Klebeeigenschaften der fertigen Latices (DE-A-21 35 4-59 & US-A-36 47 615, DE-A-16 69 231 & US-A-34 2-8 582). Die Hilfsmonomeren werden allmählich der polymerisierenden VC/E-Mischung zugesetzt, bevorzugt nachdem bereits ein Umsatz von etwa 40 % erreicht ist.

Ein gegenüber der DE-A-15 70 921 verbessertes Verfahren beschreibt die DE-A-21 39 041 (& GB-A-13 39 182). Dort wird bei Drucken von 34 bis 207 bar gearbeitet, um Copolymere mit 6 bis 30 % Ethyleneinheiten zu erhalten. So wird im Beispiel 7 dieser Anmeldung ein Copolymer aus 25,7 % E- und 74,3 % VC-Einheiten bei 138,3 bar Druck erzeugt. Dazu sind jedoch durchwegs sehr lange Reaktionszeiten (ca. 12 bis 16 Stunden) notwendig, so daß nur eine für Polymerisationsverfahren sehr bescheidene Raum-Zeit-Leistung zu erreichen ist. Überdies ist es gemäß dieser Anmeldung wesentlich, die Copolymerisation unter absoluter Abwesenheit von Reduktionsmitteln durchzuführen, also auf Redox-Katalysator-Systeme zu verzichten. Diese sind jedoch vielfach zum Erreichen bestimmter Produkteigenschaften erforderlich.

In der DE-A-21 56 378 (& US-A-37 21 636) der gleichen Anmelderin werden Carboxylgruppen enthaltende VC/E-Copolymere als neue Substanzen vorgestellt. Maßgebend für das Verfahren zu ihrer Herstellung ist die Verwendung eines nicht carboxylierten Samenlatex in Verbindung mit einem Monomerdosierverfahren und Einhaltung eines pH-Wertes von 0,5-5. Die Zulaufzeit für die Monomermischung aus VC und ungesättigter Carbonsäure soll mindestens 6 Stunden betragen. Bevorzugt werden jedoch Zulaufzeiten von etwa 10-16 Stunden, verbunden mit Nachreaktionszeiten von etwa 3 Stunden. Bei kürzeren Zulaufzeiten wird bei diesem Verfahren zu wenig Ethylen in das Copolymere eingebaut. Die Wirtschaftlichkeit dieses Verfahrens ist nicht besser als die des Verfahrens der DE-A-21 39 041.

Eine extreme Variante des in DE-A-21 39 041 beschriebenen Verfahrens wird in der EP-A-26 4-90 vorgeschlagen, die eine Polymerisation unterhalb des Sättigungsdruckes der Monomeren beschreibt. Da unter diesen « monomer-verhungerten (monomer starved) » Bedingungen sehr langsame Polymerisationsgeschwindigkeiten resultieren, müssen bei diesem Verfahren ungewöhnlich hohe Initiatormengen eingesetzt werden, um wirtschaftlich vertretbare Polymerisationszeiten zu ermöglichen. Hohe Initiatorkonzentrationen führen jedoch zwangsläufig zu niedrigen Molekulargewichten, die bekanntermaßen viele anwendungstechnische Eigenschaften der Polymeren deutlich verschlechtern. Beispiel 4 der EP-A-26 490 verdeutlicht den Initiatoreinfluß auf das Molekulargewicht besonders gut.

Ein Nachteil der bisher geschilderten Monomerdosierverfahren im technischen Maßstab besteht in der Gefahr der Bildung von Mikrokoagulaten, die die Anwendung der Latices in vielen Einsatzbereichen stören. Diese Mikrokoagulate lassen sich nur schwer abfiltrieren und erfordern zusätzlichen Aufwand bei der großtechnischen Herstellung der Latices.

Aufgabe der Erfindung war es, ein weniger aufwendiges, schnelleres und daher wirtschaftlicheres Verfahren zur Herstellung von überwiegend VC und E enthaltenden Copolymeren in wäßriger Dispersion zu finden, das die vorstehend genannten Nachteile, wie z. B. Mikrokoagulatbildung, nicht besitzt.

Diese Aufgabe konnte überraschend gut durch das durch die Ansprüche gekennzeichnete Verfahren gelöst werden. Bei gleichem, vielfach geringerem Druck und gleicher Temperatur lassen sich die dem Stand der Technik entsprechenden Ethylengehalte im Copolymer in wesentlich kürzeren Reaktionszeiten und dadurch verbesserter Raum-Zeit-Leistung erreichen. Darüberhinaus sind die nach dem erfindungsgemäßen Verfahren hergestellten Dispersionen frei von Mikrokoagulat.

Gegenstand der Erfindung ist ein Verfahren zur Herstellung feinteiliger wäßriger Copolymerdispersionen mit Festgehalten von 10 bis 70 Gew.-%, bezogen auf Dispersion, durch Emulsionspolymerisation von

a) 1 bis 50 Gew.-% Ethylen und
b) 99 bis 50 Gew.-% mindestens zweier ethylenisch ungesättigter Comonomeren

mittels Radikalinitiator in Gegenwart von Emulgator und/oder Schutzkolloid und gegebenenfalls weiterer üblicher Zusätze, wobei sich die Comonomerenphase zusammensetzt aus

b1) 60 bis 99,5 Gew.-% Vinylchlorid,
b2) 0 bis 39,5 Gew.-% ethylenisch ungesättigter öllöslicher Monomeren,
b3) 0,5 bis 10 Gew.-% ethylenisch ungesättigter funktioneller und wasserlöslicher Monomeren und
b4) 0 bis 5 Gew.-% öllöslicher Monomeren, die mono-ethylenisch ungesättigt sind und funktionelle Gruppen besitzen oder mehrfach ethylenisch ungesättigt sind, oder deren Gemische,

wobei die unter b2 bis b4 bezeichneten Monomeren jeweils mit a und b1 copolymerisierbar sind, dadurch gekennzeichnet, daß man

I die Comonomerenphase in einer Menge von etwa 1 bis 40 Gew.-% vorlegt, wobei
II der Gehalt an wasserlöslichen Monomeren 1 bis 35 Gew.-% bezogen auf das Gewicht der gemäß I vorgelegten Comonomerenphase, beträgt,
III den Rest der Komponente b) vorzugsweise mit Ausnahme von b3 während der Polymerisation in Form einer wäßrigen Emulsion dosiert und gegebenenfalls b3 als getrennten Zulauf dosiert, und
IV bei einem Ethylendruck von 10 bis 150 bar, der spätestens zum Zeitpunkt der Auspolymerisation der Vorlage aufgebaut wird, bei Temperaturen von 0 bis 120 °C polymerisiert.

Bei dem erfindungsgemäßen Verfahren werden die Comonomeren der Komponente b) praktisch vollständig in das Polymere eingebaut, sofern man die Polymerisation nicht absichtlich vorzeitig abbricht, auch der Ethylengehalt des Polymerisates ist gegenüber herkömmlichen, bei gleichem Druck hergestellten Polymeren meist deutlich erhöht. Analog kann bei der erfindungsgemäßen Herstellung von wäßrigen Dispersionen, die Copolymerisate aus Ethylen und den Comonomeren, insbesondere überwiegend VC, mit Ethylengehalten von vorzugsweise mindestens 3 Gew.-% bezogen auf das Polymere, enthalten, der Ethylendruck gegenüber den vorbekannten Verfahren gesenkt werden. Noch deutlicher wird dies bei der Herstellung von Dispersionen solcher ethylenreicherer Copolymeren, z. B. mit mindestens 20, insbesondere mindestens 27 Gew.-% Ethyleneinheiten. Es können so erfindungsgemäß bei E-Drucken von bis zu 150 bar, vorzugsweise 10 bis 90, besonders vorzugsweise 30 bis 80, insbesondere bis höchstens 70 bar (aber jeweils über dem Sättigungsdruck der Comonomeren) bei Polymerisationstemperaturen von 0 bis 120 °C, vorzugsweise 10 bis 100 °C, insbesondere 40 bis 80 °C sogar bis zu 50 Gew.-%, vorzugsweise bis zu 40, insbesondere bis 35 Gew.-% Ethylen in das in der Dispersion entstehende Copolymerisat eingebaut werden. Dabei ist die Polymerisation im allgemeinen nach etwa 10 Stunden abgeschlossen. Genauer kann das Ende der Polymerisation durch die deutliche Abnahme der Wärmeentwicklung und des Druckes festgestellt werden. Dies ist vorzugsweise etwa 2 bis 3, insbesondere 1 bis 2 Stunden nach Ende der Dosierung der Comonomeren der Fall. In bevorzugten Ausführungsformen ist die Polymerisationsdauer sogar noch kürzer, d. h. vielfach ist die Polymerisation bereits nach 7 bis 8 Std. beendet, wobei die Dosierzeit der Voremulsion häufig in vorteilhafter Weise unter 6 Std. liegt. Die Zugabe der Comonomeren b) erfolgt so, daß etwa 1 bis 40 Gew.-%, vorzugsweise 3 bis 30 Gew.-%, insbesondere vorzugsweise 3 bis 10 Gew.-% vorgelegt werden und der Rest, vorzugsweise mit Ausnahme von b3, als wäßrige Emulsion während der Polymerisation vorzugsweise im Maße des Verbrauches dosiert werden. Besonders bevorzugt ist, die Dosierung erst dann zu beginnen, wenn die Konzentration der Comonomeren, bezogen auf Gesamtdispersion, nur mehr 25 Gew.-%, mehr bevorzugt nur mehr 20, insbesondere nur mehr 10 und am meisten bevorzugt nur mehr 5 Gew.-% beträgt, und sie so durchzuführen, daß diese Grenze nicht mehr überschritten wird. Bevorzugt ist außerdem, daß dabei 1 Gew.-% als Untergrenze der Comonomerkonzentration nicht unterschritten wird. Bei der Polymerisation der Vorlage können vorteilhafterweise auch Regler verwendet oder die anderen dem Fachmann geläufigen Maßnahmen zur Begrenzung des Polymerisationsgrades getroffen werden.

Es ist aber auch möglich, einen gegebenenfalls in einem vorgeschalteten Polymerisationsschritt hergestellten Samenlatex, der im Rahmen der genannten Monomeren auch eine andere Zusammensetzung als die Comonomerdosierung besitzen kann, vorzulegen. Beispielsweise kann so ein Samenlatex bis zu 50 Gew.-% Ethyleneinheiten enthalten. Seine Menge wird auf die Gesamtmenge der jeweiligen Monomeren angerechnet. Der Gehalt an wasserlöslichen Monomeren der Komponente b3, bezogen auf die Gesamtmenge der Comonomeren bei der Herstellung des Samenlatex, liegt dabei zwischen 1 und 35 Gew.-%.

Die Comonomeren können einzeln oder im Gemisch als wäßrige Voremulsion(en) zugeführt werden. Grundsätzlich kann sich die Zusammensetzung der Comonomeren in der Vorlage von der der Dosierung unterscheiden. Es ist auch möglich, ein Comonomeres insgesamt vorzulegen und andere Comonomere ganz oder teilweise zu dosieren.

Vorzugsweise wird die Komponente b3 getrennt von den anderen Comonomeren b) in die Vorlage gegeben bzw. gegebenenfalls als getrennter Zulauf dosiert. Die übrigen Comonomeren werden vorzugsweise als Gemisch in Form einer wäßrigen Voremulsion vorgelegt und dosiert.

Beim erfindungsgemäßen Verfahren kann das Ethylen bereits teilweise oder ganz mit vorgelegt werden, d. h. der beabsichtigte E-Druck kann bereits vor Beginn der Polymerisation aufgebaut werden. Er kann aber auch erst im Laufe der Polymerisation aufgebaut werden, jedoch spätestens dann, wenn die Vorlage auspolymerisiert oder ein der Vorlage entsprechender Umsatz erreicht ist, vorzugsweise spätestens dann, wenn mit der Dosierung der Comonomeren begonnen wird. Der E-Druck kann innerhalb der genannten Grenzen während der Polymerisation beliebig gegebenenfalls auch mehrfach variiert werden, d. h., erhöht und/oder erniedrigt werden. Vorzugsweise wird er aber während der überwiegenden Zeit der Comonomerdosierung konstant gehalten. Danach wird dann vorzugsweise kein Ethylen mehr zugeführt.

Als Comonomeres (gegebenenfalls auch des Samenlatex) ist insbesondere das VC zu nennen, das mindestens 60 Gew.-%, vorzugsweise mindestens 65, insbesondere mindestens 75 Gew.-% der Komponente b) ausmacht. Als weitere Comonomeren (gegebenenfalls auch des Samenlatex), die mit E und VC copolymerisierbar und öllöslich sind, sind zu nennen : ethylenisch ungesättigte Ester, wie Allyl- und vorzugsweise Vinylester von nicht ethylenisch ungesättigten, vorzugsweise gesättigten geradkettigen, verzweigten oder cyclischen Carbonsäuren, insbesondere von $C_1$- bis $C_{20}$-Alkylcarbonsäuren, z. B. Vinylacetat, Vinylpropionat, Vinylbutyrat, Vinyl-2-ethylhexanoat, Vinyllaurat, Vinylstearat, Vinylester von stark verzweigten Carbonsäuren, die z. B. durch die sogenannte Kochsynthese von Olefinen und Kohlenoxid hergestellt werden können (sogenannte Versatic [(R)]-säurevinylester), wie Mono- und Dialkylester von ethylenisch ungesättigten Carbonsäuren, insbesondere solche von Alkoholen mit 1 bis 18, vorzugsweise 1 bis 8 C-Atomen mit $\alpha,\beta$-ungesättigten $C_3$- bis $C_8$-Monocarbonsäuren, z. B. Methylester der Acryl-, der Methacryl- und der Crotonsäure, die Ethyl-, Propyl-, Butyl-, 2-Ethylhexyl-, Lauryl- und Stearylester dieser Carbonsäuren, Dialkylester von ethylenisch ungesättigten $C_4$- bis $C_{10}$-Dicarbonsäuren, z. B. die Ester der genannten $C_1$- bis $C_{18}$-Alkohole mit Malein-, Fumar- und Itakonsäure, sowie $\alpha$-Olefine, z. B. Propylen und Butylen, sowie Styrol und Vinyltoluol, sowie Vinylether und Vinylketone, Vinylhalogenide wie Vinylfluorid und -bromid, sowie Vinylidenhalogenide, z. B. Vinylidenchlorid.

Bevorzugt werden die genannten Ester, insbesondere die Vinylester, die Acrylsäure-, die Methacrylsäure-, die Maleinsäure-, die Fumarsäureester und die Halogenderivate des Ethylens. Besonders bevorzugt sind die genannten Ester.

Diese monoethylenisch ungesättigten, keine weiteren Reaktionen eingehenden ; z. B. nicht vernetzend wirkenden, Monomeren, die einzeln oder als Gemisch eingesetzt werden können, sind in der Comonomerkomponente b) in Mengen von höchstens 39,5 Gew.-%, vorzugsweise höchstens 34,5 Gew.-%, insbesondere von 0 bis 24 Gew.-%, enthalten.

Weiterhin ist in der Comonomerkomponente b) noch mindestens ein weiteres mit den anderen Monomeren copolymerisierbares Monomer, in Mengen von 0,5 bis 10 Gew.-%, vorzugsweise 1 bis 6 Gew.-%, enthalten, das zumindest zu 50 Gew.-% (bei 20 °C) wasserlöslich ist und mindestens eine funktionelle Gruppe trägt. Darunter werden hier solche Verbindungen verstanden, die neben einer ethylenischen Doppelbindung noch Carboxyl- (COOH- oder $COO^-$-), Sulfonat-, Hydroxyl-, Phosphat-, Phosphonat-, tert.-Amino-, quaternisierte Ammonium-, Polyethylenoxid- oder gegebenenfalls durch z. B. Alkyl-, Hydroxyalkyl-, Alkoxyalkyl-, Alkanoyl- oder Alkanoylalkyl-Gruppen substituierte Amidreste aufweisen. Als Beispiele hierfür seien genannt : Acryl-, Methacryl-, Itakon-, Fumar- und Maleinsäure, deren Alkali- oder Ammoniumsalze, deren Mono- oder Diamide, insbesondere Acrylamid und Methacrylamid, die am Stickstoff ein- oder zweifach durch $C_1$- bis $C_2$-Alkylgruppen und/oder durch Methylolgruppen, von denen ihrerseits eine auch durch einen Alkylrest verethert oder durch eine Alkylcarbonsäure verestert sein kann, substituiert sein können, Monoester der genannten Dicarbonsäuren mit den bereits früher genannten $C_1$- bis $C_8$-Alkanolen, Vinyl- und Allylsulfonate, Vinyl- und Allylphosphonate und -phosphate, mit Sulfonatgruppen substituierte Ester und Amide der ungesättigten Carbonsäuren oder mit Sulfonatgruppen substituierte Styrole, N-Vinylpyrrolidon, mit tertiären Amino- oder quaternisierten Ammoniumgruppen substituierte Ester oder Amide der ungesättigten Carbonsäuren, mit Hydroxylgruppen substituierte Ester ungesättigter Carbonsäuren.

Bevorzugte wasserlösliche Comonomere sind : Acryl-, Methacryl-, Itakon-, Fumar- und Maleinsäure, deren Alkali- und Ammoniumsalze, deren Mono- und Diamide, die am Stickstoff ein- oder zweifach durch die Methylolgruppe substituiert sein können, Monoester der genannten Dicarbonsäuren mit den bereits früher genannten $C_1$- bis $C_3$-Alkanolen, Vinylsulfonate und mit Sulfonatgruppen substituierte Ester oder Amide ungesättigter Carbonsäuren, mit Sulfonatgruppen substituierte Styrole, N-Vinylpyrrolidon, mit Hydroxylgruppen substituierte Ester ungesättigter Carbonsäuren. Besonders bevorzugte wasserlösliche Monomere sind Acrylsäure, Methacrylsäure, deren Alkali- und Ammoniumsalze, Acrylamid, Methacrylamid, N-Methylolacrylamid, N-Methylolmethacrylamid, Vinylsulfonat, Hydroxyethyl(meth)acrylat, mit Sulfonatgruppen substituierte Ester und/oder Amide der (Meth-)Acrylsäure, wie z. B. Sulfoethyl(meth)acrylat oder Sulfopropyl(meth)acrylat.

Des weiteren können in der Comonomerkomponente b noch öllösliche, wenig wasserlösliche, vorzugsweise wasserunlösliche, Monomere in Mengen von 0 bis 5 Gew.-% enthalten sein, die neben einer ethylenischen Doppelbindung mindestens eine funktionelle Gruppe oder die mehrere ethylenische Doppelbindungen aufweisen. Als funktionelle Gruppen können die monoethylenisch ungesättigten Monomeren mindestens eine, vorzugsweise eine, Epoxigruppe, Carboxyl-, Hydroxyl- oder gegebenenfalls mit Alkyl-, Hydroxyalkyl-, Alkoxyalkyl-, Alkanoyl- oder Alkanoylalkyl-Gruppen substituierter Amidgruppe aufweisen, soweit sie nicht zu den Verbindungen der Komponente b3 gehören. Beispiele hierfür sind Vinyl- und Allylester ungesättigter $C_3$- bis $C_8$-Monocarbonsäuren, sowie Mono- oder Divinyl und -allylester von gesättigten oder ungesättigten $C_4$- bis $C_{10}$-Dicarbonsäuren, Triallylcyanurat und Di- und Polyester von $\alpha,\beta$-ungesättigten Carbonsäuren mit polyfunktionellen Alkoholen.

Die erfindungsgemäß hergestellten Copolymeren setzen sich vorzugsweise aus den Monomeren der Gruppen a, b1, b3 und gegebenenfalls b2 zusammen. Sie besitzen vorzugsweise K-Werte (nach DIN 53 726, gemessen in THF/$H_2O$ 95 : 5) von 20 bis 100, besonders vorzugsweise 30 bis 80, insbesondere 35 bis 70.

Das beanspruchte Verfahren wird als Emulsionspolymerisation durchgeführt. Zur Emulsionspolymerisation können alle üblichen Hilfsmittel, wie Initiatoren, Reduktionsmittel und Regler in üblichen Mengen verwendet werden, wobei auch hier je nach Wunsch eine Vorlage, eine portionsweise Zugabe oder eine mehr oder weniger kontinuierliche Dosierung möglich sind. Emulgatoren und Schutzkolloide werden zumindest teilweise zur Herstellung der Emulsion der Comonomeren in Wasser verwendet und mit dieser zum Ansatz zugegeben. Die für das erfindungsgemäße Verfahren geeigneten Emulgatoren und Schutzkolloide sind dem Fachmann bekannt.

In einer besonderen Ausführungsform können bei der Herstellung eines Samenlatex Regler in solchen Mengen zugesetzt werden, daß der mittlere Polymerisationsgrad im Bereich bis z. B. 100 gehalten wird.

Prinzipiell sind nahezu alle oberflächenaktiven Substanzen zum Einsatz bei der Emulsionspolymerisation geeignet. Anwendungstechnische Anforderungen, eingesetzte Monomere und Reaktionsbedingungen bestimmen die Auswahl im konkreten Fall. Die verwendeten Mengen liegen dabei zwischen 0 und 10 Gew.%, bevorzugt zwischen 1 und 5 Gew.%, jeweils bezogen auf Komponente b).

Sowohl anionische als auch kationische als auch nichtionische als auch amphotere Tenside sind zur Emulsionspolymerisation nach dem erfindungsgemäßen Verfahren grundsätzlich einsetzbar ; bevorzugt sind anionische und nichtionische Emulgatoren.

Eine Gliederung der für das erfindungsgemäße Verfahren möglichen Emulgatoren nach ihrer chemischen Natur findet sich z. B. bei Stache, « Tensid-Taschenbuch », Seite 159 ff, München 1979.

Bevorzugt eignen sich dabei zur Emulsionspolymerisation nach dem erfindungsgemäßen Verfahren als anionische Tenside :

1. Alkylsulfate, besonders solche mit einer Kettenlänge von 8 bis 18 C-Atomen, Alkyl- und Alkylarylethersulfate mit 8 bis 18 C-Atomen im hydrophoben Rest und 1 bis 40 Ethylen- bzw. Propylenoxideinheiten.

2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen ; ggf. können diese Alkohole oder Alkylphenole auch mit 1 bis 40 Ethylenoxid (EO-) Einheiten ethoxyliert sein.

3. Alkali- und Ammoniumsalze von Carbonsäuren mit 8 bis 20 C-Atomen im Alkyl-, Aryl-, Alkaryl- oder Aralkylrest.

4. Phosphorsäureteilester und deren Alkali- und Ammoniumsalze, besonders Alkyl- bzw. Alkylarylphosphate mit 8 bis 20 C-Atomen im organischen Rest, Alkylether- bzw. Alkylaryletherphosphate mit 8 bis 20 C-Atomen im Alkyl- bzw. Alkylarylrest und 1 bis 40 EO-Einheiten.

Als nichtionische Tenside eignen sich :

5. Alkylpolyglykolether bevorzugt mit 8 bis 40 EO-Einheiten und Alkylresten von 8 bis 20 C-Atomen,

6. Alkylarylpolyglykolether bevorzugt mit 8 bis 40 EO-Einheiten und 8 bis 20 C-Atomen in den Alkyl- und Arylresten.

7. Ethylenoxid/Propylenoxid (EO/PO)-Blockcopolymere bevorzugt mit 8 bis 40 EO- bzw. PO-Einheiten.

Weiterhin eignen sich alle bei der Emulsionspolymerisation als Schutzkolloid verwendbaren Verbindungen zum Einsatz nach dem erfindungsgemäßen Verfahren, vorzugsweise in Mengen bis 15 Gew.%, bezogen auf Komponente b). Bevorzugt eignen sich :

1. Durch Verseifung hergestellte Vinylalkohol/Vinylacetat-Copolymere mit einem Gehalt von 80 bis 100, besonders bevorzugt 86 bis 90 Mol.% Vinylalkoholeinheiten und einem viskosimetrisch ermittelten Molekulargewicht von 15 000 bis 100 000.

2. Zellulosederivate, besonders bevorzugt Hydroxyethylzellulosen mit einem Molekulargewicht von 50 000 bis $10^6$ und einem Substitutionsgradbereich von 1,5 bis 3.

3. Polyvinylpyrrolidone mit einem Molekulargewicht von 5 000 bis 400 000.

Es ist auch möglich, verschiedene Emulgatortypen während verschiedener Reaktionsstadien zu verwenden. So kann insbesondere bei Anwendung des Samenlatex-Verfahrens sich das bei der Herstellung des Samenlatex verwendete Emulgatorsystem grundsätzlich von dem der eigentlichen Polymerisation unterscheiden, soweit sich die Wirkungen der verschiedenen Emulgatoren nicht z. B. durch Reaktion miteinander aufheben.

Die Polymerisation wird mit den für die Emulsionspolymerisation üblicherweise eingesetzten Methoden eingeleitet. Besonders geeignet sind zumindest teilweise wasserlösliche, bevorzugt gänzlich wasserlösliche anorganische oder organische peroxidische Verbindungen, wie Peroxoverbindungen und Hydroperoxide, sowie wasserlösliche Azoverbindungen. Genannt seien Alkali- und Ammoniumperoxosulfate, -peroxodisulfate und -peroxophosphate, Wasserstoffperoxid, tert.-Butylhydroperoxid, Azobiscyanovaleriansäure.

Gegebenenfalls können die genannten Peroxidinitiatoren auch in bekannter Weise mit Reduktionsmitteln kombiniert werden. Geeignet sind z. B. Alkali-Formaldehydsulfoxylate (Brüggolith[R], Rongalit[R], Alkalibisulfite, -sulfite, -thiosulfate und Ascorbinsäure. Vielfach ist dann auch der an sich bekannte Zusatz geringer Mengen von Schwermetallverbindungen, z. B. von Eisen-II-Salzen angezeigt.

Der für die Polymerisation gewünschte pH-Bereich, der im allgemeinen zwischen 2,5 und 10, insbesondere 3 und 8 liegt, kann in an sich bekannter Weise durch geeignete Puffersysteme, z. B. den Phosphat- oder Carbonatpuffer, konstant gehalten werden.

Die erfindungsgemäß hergestellten überwiegend VC und E enthaltenden Polymerisatdispersionen oder Polymerisate können in allen Gebieten Anwendung finden, für die bekannte VC/E-Copolymerisate geeignet sind. So können die erfindungsgemäß hergestellten Dispersionen beispielsweise besonders gut zur Herstellung von Klebemitteln für Holz, Papier, Kunststoffolien oder Kunstleder, als Bindemittel für Textilien oder in Anstrichfarben oder zur Beschichtung von Papier eingesetzt werden.

Das aus der Dispersion durch Abtrennen des Wassers gewonnene Polymerisat kann über die Schmelze zu Formkörpern verarbeitet werden oder nach Auflösung in einem geeigneten Lösungsmittel zur Herstellung von Lacken oder Klebstoffen dienen.

Die Erfindung wird durch folgende Beispiele und Vergleichsversuche erläutert. Dabei beziehen sich alle Prozentangaben, soweit nichts anderes angegeben ist, auf das Gewicht.

Beispiel 1

In einem 16 l-Autoklaven wurden 3 800 g entmineralisiertes Wasser, 27 g Na-dodecylbenzolsulfonat, 28 g Na-vinylsulfonat, 21 g Acrylamid und 42 g Acrylsäure vorgelegt. Es wurde mit konz. NH$_3$-Lösung (ca. 5 ml) auf pH 3,5 eingestellt und auf 70 °C aufgeheizt.

Dann wurden 410 g Vinylacetat und 1 g t-Butylhydroperoxid und danach, während ca. 5 Minuten, 25 g Ammoniumperoxodisulfat in 240 g Wasser zugegeben.

30 Minuten danach wurde Ethylen bis zu einem Druck von 65 bar zugegeben.

Dann wurde, unter Konstanthalten des Ethylendrucks, während 6 Stunden eine Voremulsion aus 2 800 g demineralisiertem Wasser, 55 g Na-dodecylbenzolsulfonat, 15 g Ammoniumperoxodisulfat, 15 g konzentrierte NH$_3$-Lösung und 5 500 g Vinylchlorid gleichmäßig zudosiert.

Danach wurde noch 1 Stunde nachreagieren gelassen und nach Einstellen auf pH 7 gekühlt und entspannt.

Es resultierte eine stabile, feinteilige Dispersion mit 51,5 % Festgehalt und einer Mindestfilmbildetemperatur von 19 °C (Glasübergangstemperatur 20 °C), die sich ohne Rückstand über ein 70 μm-Sieb abfüllen ließ.

Der Aufstrich war klar und stippenfrei. Das Vinylchlorid-Ethylen-Copolymere enthielt 20,4 Gew.-% einpolymerisierte Ethylen-Einheiten.

Vergleichsversuch A

Beispiel 1 wurde wiederholt mit dem Unterschied, daß die wäßrige Phase der Voremulsion und das Vinylchlorid getrennt dosiert wurden.

Es resultierte eine Dispersion mit 50 % Festgehalt, die bei Raumtemperatur nicht verfilmte (Glasübergangstemperatur 30 °C). Beim Abfüllen über ein 70 μm-Sieb blieb ein Rückstand von 40 g.

Der Aufstrich zeigte das Vorliegen von Mikrokoagulaten.

Das Vinylchlorid-Ethylen-Copolymere enthielt 16,8 Gew.-% Ethylen-Einheiten.

Beispiel 2

In einen 1,6 m$^3$ Polymerisationsautoklaven wurden 325 kg entionisiertes Wasser, 0,9 kg eines Natriumalkylsulfonats (Alkylrest mit ca. 15 C-Atomen), 5,3 kg Tridecylpolyglykolether (ca. 15 Glykoleinheiten), 3,3 kg Natriumvinylsulfonat, 2,2 kg Acrylamid, 4,4 kg Acrylsäure, 18 kg Vinyllaurat und 3 kg Butylacrylat vorgelegt und mit konz. NH$_3$-Lösung auf pH 3,5 eingestellt.

Es wurde evakuiert, mit N$_2$ belüftet und nach erneutem Evakuieren auf 50 °C erwärmt. Danach wurden 60 kg Vinylchlorid einemulgiert und Ethylen bis zu einem Gleichgewichtsdruck von 66 bar aufgedrückt.

Die Polymerisation wurde dann gestartet, indem zwei Lösungen von Redox-Initiatorkomponenten mit jeweils 2 kg/h dosiert wurden.

(Oxidationskomponente :
8,4 kg Ammonpersulfat
5 kg konz. NH$_3$-Lösung
134 kg Wasser
Reduktionskomponente :
4,2 kg Natriumformaldehydsulfoxylat
140 kg Wasser)

30 min. nach Reaktionsbeginn wurde begonnen, eine Voremulsion zu dosieren, die aus 244 kg entionisiertem Wasser, 80 kg der Lösung der Reduktionskomponente, 17,6 kg des Tridecylpolyglykolethers und 565 kg Vinylchlorid bestand. Die Dosierung erfolgte gleichmäßig über 8 h. Dabei wurde kein Ethylen nachgedrückt.

Sobald die Voremulsionsdosierung gestartet war, wurde die Dosierung der getrennten Lösung der Reduktionskomponente gestoppt und erst wieder aufgenommen, als die Dosierung der Voremulsion beendet war ; die Nachreaktionszeit betrag 2 h.

Danach wurde die Dispersion mit 12,5 %iger NH₃-Lösung auf pH 7,5 eingestellt, gekühlt und entspannt. Zum Entfernen des Rest-Vinylchlorids wurde 1 h evakuiert.

Dann wurde der gesamte Ansatz über ein Sieb mit 70 μm Maschenweite völlig problemlos abgefüllt ; der Gesamtrückstand betrug 61 g. Die Dispersion hatte einen Feststoffgehalt von 51 % und eine Mindestfilmbildetemperatur von 0 °C. Der Aufstrich war klar und stippenfrei. Das Vinylchlorid-Ethylen-Copolymere enthielt 25 % einpolymerisierte Ethyleneinheiten.

Vergleichsbeispiel 2

Beispiel 2 wurde mit getrennter Dosierung von Vinylchlorid und wäßriger Phase der Voremulsion wiederholt.

Die Dispersion war nicht über ein 70 μm-Sieb filtrierbar. Filtration einer kleinen Probe im Labor ergab, daß mindestens 8,6 kg Rückstand vorlagen. Der Aufstrich war stark stippig.

Beispiel 3

In einem 16 l-Rührautoklaven wurden 3 500 g entioniertes Wasser, 15 g Natriumlaurylsulfat, 60 g Tridecylpolyglykolether (ca. 15 Glykoleinheiten), 20 g Natriumvinylsulfonat, 20 g Acrylsäure, 3 g Acrylamid, 100 g Butylacrylat und 150 g Vinyllaurat vorgelegt und mit 12,5 %iger NH₃-Lösung auf pH 3,5 eingestellt. Dann wurde evakuiert, mit N₂ belüftet und nach nochmaligem Evakuieren auf 70 °C erwärmt.

Es wurden 700 g Vinylchlorid zugegeben und Ethylen bis zu einem Gleichgewichtsdruck von 50 bar aufgedrückt.

Dann wurde die Reaktion durch Zugeben von 20 g Ammonpersulfat in 200 g Wasser (während 5 min) gestartet und nach 45 min. wurden 3 Dosierungen eingefahren, nämlich

1. 20 g Ammonpersulfat in 500 g Wasser

2. 100 g Acrylsäure, 20 g 2-Hydroxyethylacrylat und 30 g 25 %ige NH₃-Lösung in 330 g Wasser

3. eine Voremulsion aus 2 825 g Wasser, 75 g Natriumlaurylsulfat, 160 g des Tridecylpolyglykolethers, 20 g Natriumvinylsulfonat und 5 600 g Vinylchlorid
und während 7 h gleichmäßig dosiert.

Anschließend wurde noch 2 h, ebenfalls bei 70 °C, nachreagieren gelassen.

Es wurde bei der Reaktion kein Ethylen nachgedrückt ; der Enddruck betrug 23 bar.

Nach Einstellen auf pH 7,1 (mit 12,5 %iger NH₃-Lösung) wurde die Dispersion gekühlt, entspannt und durch 30 minütiges Evakuieren von überschüssigem Vinylchlorid befreit.

Es resultierte eine Dispersion mit Feststoffgehalt 50,0 % und einer Mindestfilmbildetemperatur von 38 °C. Die Dispersion ließ sich ohne Rückstand über ein 70 μm Sieb filtrieren ; der Aufstrich war stippenfrei.

Beispiel 4

In einen 16 l-Polymerisationsautoklav wurden 3 330 g entionisiertes Wasser, 20 g Tridecylpolyglykolether (ca. 15 Glykoleinheiten), 30 g Natriumvinylsulfonat, 3 g Acrylamid, 20 mg Ferroammonsulfat und 250 g Vinylversatat (Ester der Versatic ®-Säure mit 10 C-Atomen) vorgelegt. Es wurde evakuiert, mit N₂ belüftet und nach nochmaligem Evakuieren auf 50 °C erwärmt ; 700 g Vinylchlorid wurden zugegeben und mit Ethylen bis 65 bar gesättigt. Die Polymerisation wurde dann durch Zudosieren (jeweils 60 g/h) von Oxidations- und Reduktionskomponente des Initiators gestartet.

(Oxidationskomponente :
  84 g Ammonpersulfat
  750 g Wasser
Reduktionskomponente :
  42 g Natriumformaldehydsulfoxylat
  790 g Wasser)

Ab 30 min. nach Reaktionsbeginn wurden eine Lösung von 110 g Acrylsäure und 20 g 2-Hydroxyethylacrylat in 300 g Wasser sowie eine Voremulsion aus 2 530 g Wasser, 100 g Natriumlaurylsulfat, 10 g Natriumvinylsulfonat, 40 g N-Butoxymethylacrylamid, 30 g 25 %ige NH₃-Lösung, 460 g der Reduktionskomponente und 5 600 g Vinylchlorid gleichmäßig über 9 h dosiert.

Während die Voremulsionsdosierung lief, ruhte die Dosierung der Reduktionskomponente.

Nach Beendigung der Voremulsionsdosierung wurde noch 2,5 h unter weiterer Zugabe von Initiator nachreagieren gelassen. Während der gesamten Reaktion wurde kein zusätzliches Ethylen zugeführt, der Enddruck betrug 54 bar. Nach Einstellen auf pH 7,0 und Entspannungsvorgang wie in Beispiel 3 resultierte eine Dispersion mit 51,6 % Feststoffgehalt und einer Mindestfilmbildetemperatur von 13 °C. Die Dispersion ließ sich ohne Rückstand über ein 70 μm-Sieb filtrieren ; der Aufstrich war klar und stippenfrei.

**Patentansprüche**

1. Verfahren zur Herstellung feinteiliger wäßriger Copolymerdispersionen mit Festgehalten von 10 bis 70 Gew.-%, bezogen auf Dispersion, durch Emulsionspolymerisation von

a) 1 bis 50 Gew.-% Ethylen und

b) 99 bis 50 Gew.-% mindestens zweier ethylenisch ungesättigter Comonomeren
mittels Radikalinitiator in Gegenwart von Emulgator und/oder Schutzkolloid und gegebenenfalls weiterer üblicher Zusätze, wobei sich die Comonomerenphase zusammensetzt aus

b1) 60 bis 99,5 Gew.-% Vinylchlorid (VC),

b2) 0 bis 39,5 Gew.-% ethylenisch ungesättigter, öllöslicher Monomeren,

b3) 0,5 bis 10 Gew.-% ethylenisch ungesättigter funktioneller und wasserlöslicher Monomeren und

b4) 0 bis 5 Gew.-% öllöslicher Monomeren, die monoethylenisch ungesättigt sind und funktionelle Gruppen besitzen oder mehrfach ethylenisch ungesättigt sind, oder deren Gemische, wobei die unter b2) bis b4) bezeichneten Monomeren jeweils mit a) und b1) copolymerisierbar sind, dadurch gekennzeichnet, daß man

I. die Comonomerphase in einer Menge von etwa 1 bis 40 Gewichtsprozent vorlegt, wobei

II. der Gehalt an wasserlöslichen Monomeren 1 bis 35 Gew.-%, bezogen auf das Gewicht der gemäß I vorgelegten Comonomerphase beträgt,

III. den Rest der Komponente b) während der Polymerisation in Form einer wäßrigen Emulsion dosiert und

IV. bei einem Ethylendruck von 10 bis 150 bar, der spätestens zum Zeitpunkt der Auspolymerisation der Vorlage aufgebaut wird, bei Temperaturen von 0 bis 120 °C polymerisiert.

2. Verfahren nach Anspruch 1, dadurch gekennzeichnet, daß als Comonomere neben dem Vinylchlorid gegebenenfalls

b2) ethylenisch ungesättigte Ester von nicht ethylenisch ungesättigten geradkettigen, verzweigten oder cyclischen Carbonsäuren und/oder Alkylester von ethylenisch ungesättigten Carbonsäuren und/oder Halogenderivate des Ethylens und

b3) ethylenisch ungesättigte Monomere, die noch eine Carboxylgruppe, eine gegebenenfalls substituierte Amidgruppe, eine Sulfonatgruppe, eine Phosphatgruppe, eine Phosphonatgruppe oder eine Hydroxylgruppe aufweisen, verwendet werden.

3. Verfahren nach Anspruch 1 oder 2, dadurch gekennzeichnet, daß als Komponente b2) die Vinylester von $C_1$- bis $C_{20}$-Alkylcarbonsäuren, $C_1$- bis $C_{18}$-Alkylester mit $\alpha,\beta$-ungesättigten $C_3$- bis $C_8$-Monocarbonsäuren und/oder Di-$C_1$- bis $C_{18}$-Alkylester von ethylenisch ungesättigten $C_4$- bis $C_{10}$-Dicarbonsäuren, Vinylhalogenide und/oder Vinylidenhalogenide verwendet werden.

4. Verfahren nach einem der Ansprüche 1 bis 3, dadurch gekennzeichnet, daß als Komponente b3) Acrylsäure, Methacrylsäure, deren Alkali- und Ammoniumsalze, Acrylamid, Methacrylamid, N-Methylolacrylamid, N-Methylolmethacrylamid, Vinylsulfonat, Hydroxyethyl- (meth)acrylat, Sulfoethyl(meth)acrylat und/oder Sulfopropyl(meth)acrylat verwendet wird.

5. Verfahren nach einem der Ansprüche 1 bis 3, dadurch gekennzeichnet, daß ein in einer Vorstufe hergestellter Samenlatex vorgelegt wird.

6. Verfahren nach einem der vorangegangenen Ansprüche, dadurch gekennzeichnet, daß der Ethylendruck bis zum Ende der Dosierung der Comonomeren konstant gehalten wird.

7. Verfahren nach einem der vorangegangenen Ansprüche, dadurch gekennzeichnet, daß die Comonomerdosierung dann begonnen wird, wenn der Comonomergehalt in der Dispersion höchstens 25 Gew.-% beträgt und so durchgeführt wird, daß diese Grenze nicht mehr überschritten wird.

8. Verwendung der nach einem der vorangehenden Ansprüche hergestellten Dispersionen zur Herstellung von Klebemitteln für Holz, Papier, Kunststoffolien oder Kunstleder, als Bindemittel für Textilien oder in Anstrichfarben oder zur Beschichtung von Papier.

## Claims

1. Process for the manufacture of finely divided aqueous copolymer dispersions having solids contents of from 10 to 70 % by weight, based on the dispersion, by means of the emulsion polymerisation of

a) from 1 to 50 % by weight of ethylene and

b) from 99 to 50 % by weight of at least two ethylenically unsaturated comonomers

by means of a radical initiator in the presence of an emulsifier and/or a protective colloid and optionally other customary additives, the vinyl monomer phase comprising

b1) from 60 to 99.5 % by weight of vinyl chloride (VC),

b2) from 0 to 39.5 % by weight of ethylenically unsaturated, oil-soluble monomers,

b3) from 0.5 to 10 % by weight of ethylenically unsaturated, functional, water-soluble monomers, and

b4) from 0 to 5 % by weight of oil-soluble monomers that are monoethylenically unsaturated and have functional groups, or are polyethylenically unsaturated, or mixtures thereof, the monomers decribed under b2) to b4) in each case being copolymerisable with a) and b1), characterised in that

I. the comonomer phase is introduced initially, in an amount of approximately from 1 to 40 % by weight,

II. the content of water-soluble monomers is from 1 to 35 % by weight, based on the weight of the comonomer phase introduced initially according to I,

III. the remainder of component b) is metered in during the polymerisation in the form of an aqueous emulsion and

IV. polymerisation is carried out under an ethylene pressure of from 10 to 150 bar, which is built up at the latest by the point in time at which the polymerisation of the material introduced initially is complete, and at temperatures of from 0 to 120°.

2. Process according to claim 1, characterised in that, as a comonomer, there are used in addition to vinyl chloride optionally

b2) ethylenically unsaturated esters of non-ethylenically unsaturated, straight-chain, branched or cyclic, carboxylic acids and/or alkyl esters of ethylenically unsaturated carboxylic acids and/or halogen derivatives of ethylene and

b3) ethylenically unsaturated monomers additionnally containing a carboxy group, an optionally substituted amide group, a sulphonate group, a phosphate group, a phosphonate group or a hydroxy group.

3. Process according to claim 1 or 2, characterised in that there are used, as component b2), the vinyl esters of ($C_1$ to $C_{20}$)-alkylcarboxylic acids, ($C_1$ to $C_{18}$)-alkyl esters with $\alpha,\beta$-unsaturated ($C_3$ to $C_8$)-monocarboxylic acids and/or di-($C_1$ to $C_{18}$)-alkyl esters of ethylenically unsaturated ($C_4$ to $C_{10}$)-dicarboxylic acids, vinyl halides and/or vinylidene halides.

4. Process according to any one of claims 1 to 3, characterised in that there is used, as component b3), acrylic acid, methacrylic acid, the alkali metal and ammonium salts thereof, acrylamide, methacrylamide, N-methylolacrylamide, N-methylolmethacrylamide, vinyl sulphonate, hydroxyethyl (meth)acrylate, sulphoethyl (meth)acrylate and/or sulphopropyl (meth)acrylate.

5. Process according to any one of Claims 1 to 3, characterised in that a seed latex manufactured in a preliminary step is introduced initially.

6. Process according to any one of the preceding claims, characterised in that the ethylene pressure is kept constant until the end of the metering-in of the comonomers.

7. Process according to any one of the preceding claims, characterised in that the comonomer metering is begun when the comonomer content of the dispersion is at most 25 % by weight, and is carried out in such a manner that that limit is not exceeded.

8. Use of the dispersions manufactured according to any one of the preceding claims in the manufacture of adhesives for wood, paper, plastics sheets or imitation leather, as binders for textiles or in paints, or for coating paper.

**Revendications**

1. Procédé de préparation de dispersions aqueuses finement divisées de copolymère présentant une teneur en matières sèches de 10 à 70 % en poids par rapport à la dispersion, par polymérisation en émulsion de :

a) 1 à 50 % en poids d'éthylène et

b) 99 à 50 % en poids d'au moins 2 comonomères à insaturation éthylénique

au moyen d'initiateurs radicalaires, en présence d'émulsifiants et/ou de colloïdes protecteurs et éventuellement d'autres additifs classiques, la phase de comonomères étant composée de :

b1) 60 à 99,5 % en poids de chlorure de vinyle (VC),

b2) 0 à 39,5 % en poids de monomères à insaturation éthylénique, solubles dans l'huile,

b3) 0,5 à 10 % en poids de monomères solubles dans l'eau, fonctionnels, à insaturation éthylénique, et

b4) 0 à 5 % en poids de monomères solubles dans l'huile, à insaturation monoéthylénique et présentant des groupes fonctionnels, ou bien à insaturation polyéthylénique, ou de leurs mélanges,

les monomères précisés ci-dessus sous b2) à b4) étant dans tous les cas copolymérisables avec a) et b1), caractérisé en ce que :

I. on introduit au préalable la phase de comonomères en quantité d'environ 1 à 40 % en poids,

II. la teneur en monomères solubles dans l'eau étant de 1 à 35 % en poids, par rapport au poids de la phase des comonomères introduites selon I,

III. on introduit de manière dosée le reste des composants b) durant la polymérisation, sous la forme d'une émulsion aqueuse, et

IV. on effectue la polymérisation sous une pression d'éthylène de 10 à 150 bars, qui est établie au plus tard au moment de la polymérisation totale de la charge préalable, à des températures de 0 à 120 °C.

2. Procédé selon la revendication 1, caractérisé en ce que l'on utilise comme comonomères, en dehors du chlorure de vinyle, éventuellement :

b2) des esters à insaturation éthylénique d'acides carboxyliques ne présentant pas d'insaturation éthylénique, à chaîne droite, ramifiée ou cyclique et/ou des esters d'alkyle d'acides carboxyliques à insaturation éthylénique et/ou des dérivés halogénés de l'éthylène et

b3) des monomères à insaturation éthylénique qui contiennent encore un groupe carboxy, un groupe amide éventuellement substitué, un groupe sulfonate, un groupe phosphate, un groupe phosphonate ou un groupe hydroxy.

3. Procédé selon la revendication 1 ou 2, caractérisé en ce que l'on utilise comme composants b2) les esters de vinyle d'acides $C_1$-$C_{20}$-alkylcarboxyliques, des esters d'alkyle en $C_1$-$C_{18}$ d'acides mono-carboxyliques en $C_3$-$C_8$ $\alpha,\beta$-insaturés et/ou des esters di-$C_1$-$C_{18}$-alkyliques d'acides dicarboxyliques en $C_4$-$C_{10}$ à insaturation éthylénique, des halogénures de vinyle et/ou des halogénures de vinylidène.

4. Procédé selon l'une des revendications 1 à 3, caractérisé en ce que l'on utilise comme composants b3) l'acide acrylique, l'acide méthacrylique, leurs sels de métaux alcalins et d'ammonium, l'acrylamide, le méthacrylamide, le N-méthylolacrylamide, le N-méthylolméthacrylamide, le sulfonate de vinyle, l'hydroxyéthyl-(méth)acrylate, le sulfoéthyl (méth)acrylate et/ou le sulfopropyl (méth)acrylate.

5. Procédé selon l'une des revendications 1 à 3, caractérisé en ce que l'on introduit au préalable un latex d'ensemencement préparé dans une étape préalable.

6. Procédé selon l'une quelconque des revendications précédentes, caractérisé en ce que la pression d'éthylène est maintenue constante jusqu'à la fin de l'introduction dosée des comonomères.

7. Procédé selon l'une quelconque des revendications précédentes, caractérisé en ce que l'introduction dosée des comonomères est commencée lorsque la teneur en comonomères dans la dispersion est au plus de 25 % en poids, et est effectuée de telle manière que cette limite n'est plus dépassée.

8. Utilisation des dispersions préparées selon l'une quelconque des revendications précédentes, pour la fabrication d'adhésifs pour le bois, le papier, les feuilles de matières plastiques ou les cuirs synthétiques, comme liants pour les textiles ou dans les colorants pour peinture, ou pour le couchage du papier.